# EUROPEAN PATENT APPLICATION

(11) **EP 4 272 933 A1**
(43) Date of publication of application: **08.11.2023**
(21) Application number: 22901611.8
(22) Date of filing: 11.11.2022
(51) Int. Cl.: B29C 65/00, H01M 50/105, B29L 31/00

(54) **FREE-FOLDING APPARATUS FOR POUCH-TYPE BATTERIES**

(30) Priority: 01.12.2021 KR 20210170400
(71) Applicant: LG Energy Solution, Ltd., Seoul 07335 (KR)
(72) Inventor: BAEK, Ju Hwan, Daejeon 34122 (KR); OH, Jung Su, Daejeon 34122 (KR); LEE, Jin Soo, Daejeon 34122 (KR); HWANG, Seung Jin, Daejeon 34122 (KR)
(74) Representative: Plasseraud IP
(86) International application number: PCT/KR2022/017699
(87) International publication number: WO 2023/101253

(57) **Abstract**

A pre-folding apparatus for a pouch-type battery includes: a main frame, a rib, a pusher support portion, and a pusher. The main frame includes a pair of columns and a horizontal bar configured to connect upper portions of the columns. The rib installed to be fixed across the pair of columns under the horizontal bar has a forming protrusion whose upper end is flat. The pusher support portion disposed above the rib includes a linear driving portion configured to move the pusher support portion in a vertical direction along the columns. Finally, the pusher installed at the pusher support portion is aligned with the forming protrusion.

## Description

### [Technical Field]

This application claims the benefit of priority based on Korean Patent Application No. 10-2021-0170400, filed on December 01, 2021, and the entire contents of the Korean patent application are incorporated herein by reference.

The present disclosure relates to a pre-folding apparatus for a pouch-type battery, and more particularly, to a pre-folding apparatus for a pouch-type battery that performs premachining of a protruding bridge connecting two storage portions in which an electrode assembly is accommodated, thus improving the quality of the pouch-type battery and reducing defects.

### [Background Art]

With the development of technology and an increase in demand for mobile devices and a rapid increase in demand for secondary batteries as an energy source to replace fossil fuel, a lot of research has been conducted on secondary batteries that can meet various needs.

In terms of the shape of a battery case, secondary batteries are mainly classified into cylindrical batteries in which an electrode assembly is embedded in a cylindrical metal can, prismatic batteries in which an electrode assembly is embedded in a prismatic metal can, and pouch-type batteries in which an electrode assembly is embedded in a pouch-type case of an aluminum laminate sheet. Also, in terms of the material, lithium secondary batteries, such as lithium-ion batteries and lithium-ion polymer batteries, having high energy density and high discharge voltage and being excellent in terms of output stability are of high demand.

Among the secondary batteries, pouch-type batteries are of high demand due to having advantages in terms of the shape that the battery has a small thickness, stacking arrangement of a plurality of the batteries is easy, and the shape of the battery can be partially deformed. A pouch-type battery is formed of a structure in which an electrode assembly and an electrolyte are embedded in a pouch-type laminate sheet that can store an electrode assembly, and a resin layer of the laminate sheet can be fused by heat.

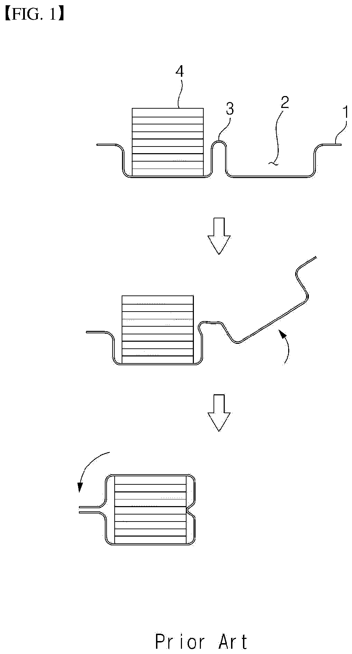

FIG. 1 is a view schematically illustrating a folding process which is one of a series of processes for conventionally manufacturing a pouch-type battery. The folding process is a process prior to sealing a laminate sheet 1 that is folded in half while containing an electrode assembly 4. Two concave storage portions 2 (also called "cup" in the industry) configured to accommodate the electrode assembly 4 are formed on the laminate sheet 1, and a protruding bridge 3 in between the two storage portions 2 that forms a sidewall thereof is folded in half to prepare for a subsequent sealing process.

However, with pouch-type batteries beginning to be manufactured as large cells, the need to improve the conventional folding process has emerged. That is, with an increase in the capacity and size of pouch-type batteries, the thickness of laminate sheets has also increased by about 120% as compared to the past. The increase in the thickness of laminate sheets is an inevitable change to secure pressure resistance of high-capacity pouch-type batteries and has affected the folding process.

Due to an increase in rigidity of a laminate sheet with an increased thickness, in the folding process shown in FIG. 1, the bridge in between the two storage portions that forms the sidewall thereof is not allowed to be completely unfolded when the laminate sheet is folded in half. Accordingly, a sharp portion of the bridge that is not reliably unfolded pushes the electrode assembly in the storage portions, which leads to distortion of a desirable alignment state of the electrode assembly.

As one way of addressing such a problem, a laminate sheet not containing an electrode assembly is folded in half and unfolded back to its original state in a preliminary primary folding process, and then an electrode assembly is put in storage portions of the laminate sheet and the laminate sheet is completely folded in half in a secondary folding process.

Although decreasing rigidity of a bridge through the primary folding process is effective in addressing the conventional problem, folding the laminate sheet in an empty state that does not contain the electrode assembly exactly in half requires designing a rather complicated apparatus, and since two folding processes are necessary, there are problems that a facility area occupied by a folding apparatus increases, and takt time increases.

### [Related Art Document]

### [Patent Document]

(Patent Document 1) Korean Patent Registration No. 10-1603074 (Date of Registration: March 8, 2016)

### [Disclosure]

### [Technical Problem]

An object of the present disclosure is to provide an apparatus that allows performing a folding process for a pouch-type battery, which is made of a laminate sheet with a large thickness, just by a single main folding process without a preliminary primary folding process.

### [Technical Solution]

The present disclosure relates to a pre-folding apparatus for a pouch-type battery. In one embodiment, a pre-folding apparatus for a pouch-type battery includes: a main frame including a pair of columns and a horizontal bar configured to connect upper portions of the columns; a rib installed to be fixed across the pair of columns under the horizontal bar and having a forming protrusion whose upper end is flat; a pusher support portion disposed above the rib and including a linear driving portion configured to move the pusher support portion in a vertical direction along the columns; and a pusher installed at the pusher support portion and aligned with the forming protrusion.

According to the pre-folding apparatus for a pouch-type battery of the present disclosure, a laminate sheet including a bridge formed to protrude from in between two concave storage portions configured to accommodate an electrode assembly may be added so that the bridge is fitted to the forming protrusion, and due to downward movement of the pusher support portion, the pusher may press a sharp portion of the bridge so that the sharp portion is plastically deformed to be flat.

In one embodiment of the present invention, the pusher may be a roller configured to move in a longitudinal direction of the pusher support portion due to driving of a roller traveling portion.

The roller may travel on the forming protrusion due to the driving of the roller traveling portion.

Also, the pre-folding apparatus may further include a roller driving portion connected to a rotating shaft of the roller to rotate the roller.

In another embodiment of the present invention, the pusher may be a bar-type pusher whose length corresponds to a length of the forming protrusion.

Also, a width of the pusher may be wider than a width of the upper end of the forming protrusion.

In one embodiment, in response to a power load, which is applied during the downward movement of the pusher support portion, reaching a reference value, the linear driving portion may stop the downward movement.

According to still another embodiment, a heater configured to heat the pusher may be provided, and here, the heater may heat the pusher to a temperature range lower than a melting point of a thermoplastic resin forming an internal insulating layer of the laminate sheet.

Using the pre-folding apparatus for a pouch-type battery having the above configuration, it is possible to provide a pouch-type battery including: an electrode assembly; and a pouch-type battery case which has storage portions, which are configured to accommodate the electrode assembly, protruding from both sides in a thickness direction and has edges of three surfaces, excluding one corner forming a sidewall of the storage portions, sealed by heat fusion, wherein a plastically-worked flat portion is formed to extend along a middle of the sidewall of the storage portions.

### [Advantageous Effects]

Using a pre-folding apparatus for a pouch-type battery of the present disclosure, it is possible to manufacture a pouch-type battery just by a single main folding process, without two folding processes as in the past, including a preliminary primary folding process in which a laminate sheet is folded in half and unfolded back to its original state and a secondary folding process in which an electrode assembly is put in storage portions of the laminate sheet and the laminate sheet is completely folded in half.

In particular, since a plastically-worked flat portion is formed to extend along a middle of a sidewall of storage portions of a pouch-type battery case in the pre-folding apparatus of the present disclosure, a problem that a sharp portion of a bridge that is not reliably unfolded pushes an electrode assembly in the storage portions and distorts an original alignment state does not occur even when a thick laminate sheet is used.

Advantageous effects of the present invention are not limited to those mentioned above, and other unmentioned advantageous effects should be clearly understood by those of ordinary skill in the art from the detailed description below.

### [Brief Description of the Drawings]

FIG. 1 is a view schematically illustrating a conventional folding process for manufacturing a pouch-type battery.
FIG. 2 is a view illustrating a pre-folding apparatus according to a first embodiment of the present invention.
FIG. 3 is a view for describing an operation of the pre-folding apparatus of FIG. 2.
FIG. 4 is a view illustrating pre-folding and main folding processes for a pouch using the pre-folding apparatus of FIG. 2.
FIG. 5 is a view illustrating a pre-folding apparatus according to a second embodiment of the present invention.

### [Detailed Description]

Since various modifications may be made to the present disclosure and the present invention may have various embodiments, specific embodiments will be described in detail below.

However, this does not limit the present invention to the specific embodiments, and all modifications, equivalents, or substitutes included in the spirit and technical scope of the present invention should be understood as belonging to the present invention.

In the present disclosure, terms such as "include" or "have" should be understood as specifying that features, numbers, steps, operations, elements, components, or combinations thereof are present and not as precluding the possibility of the presence or addition of one or more other features, numbers, steps, operations, elements, components, or combinations thereof in advance.

Also, in the present disclosure, when a part such as a layer, a film, an area, or a plate is described as being "on" another part, this includes not only a case where the part is "directly on" the other part, but also a case where still another part is present therebetween. On the contrary, when a part such as a layer, a film, an area, or a plate is described as being "under" another part, this includes not only a case where the part is "directly under" the other part, but also a case where still another part is present therebetween. Also, in the present application, being disposed "on" may include not only being disposed on an upper portion, but also being disposed on a lower portion.

The present disclosure relates to a pre-folding apparatus for a pouch-type battery (hereinafter, briefly referred to as a "pre-folding apparatus").

In one embodiment, the pre-folding apparatus includes a main frame forming a framework and a rib and a pusher support portion which are installed within the main frame, and a pusher is installed at the pusher support portion.

The main frame includes a pair of columns and a horizontal bar configured to connect upper portions of the columns. Also, the rib is installed to be fixed across the pair of columns under the horizontal bar and has a forming protrusion whose upper end is flat. Further, the pusher support portion disposed above the rib includes a linear driving portion configured to move the pusher support portion in a vertical direction along the columns, and the pusher installed at the pusher support portion is aligned with the forming protrusion of the rib.

According to the pre-folding apparatus of the present disclosure, a laminate sheet including a bridge formed to protrude from in between two concave storage portions configured to accommodate an electrode assembly is added so that the bridge is fitted to the forming protrusion, and due to downward movement of the pusher support portion, the pusher presses a sharp portion of the bridge so that the sharp portion is plastically deformed to be flat.

Using the pre-folding apparatus, it is possible to fold a laminate sheet and manufacture a pouch-type battery just by a single main folding process, without two folding processes as in the past, including a preliminary primary folding process in which a laminate sheet is folded in half and unfolded back to its original state and a secondary folding process in which an electrode assembly is put in storage portions of the laminate sheet and the laminate sheet is completely folded in half.

In particular, since a plastically-worked flat portion is formed to extend along a middle of a sidewall of storage portions of a pouch-type battery case in the pre-folding apparatus, a problem that a sharp portion of a bridge that is not reliably unfolded pushes an electrode assembly in the storage portions and distorts an original alignment state does not occur even when a thick laminate sheet is used.

### [Modes of the Invention]

Hereinafter, a pre-folding apparatus of the present disclosure will be described in detail with reference to the accompanying drawings.

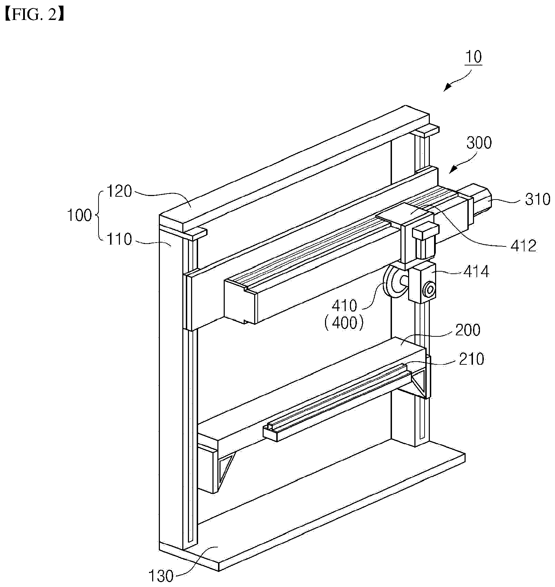

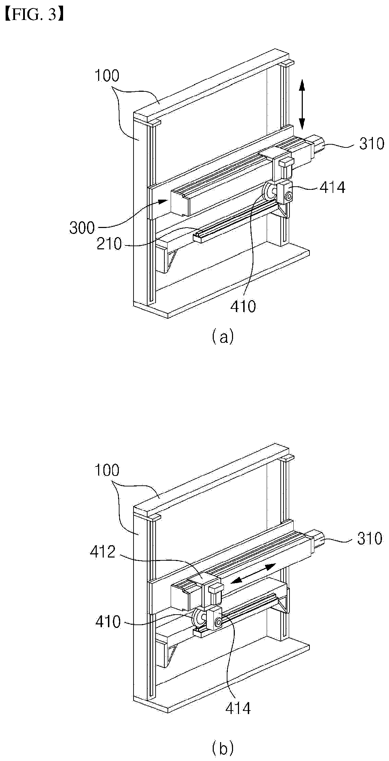

FIG. 2 is a view illustrating a pre-folding apparatus 10 according to a first embodiment of the present invention, and FIG. 3 is a view for describing an operation of the pre-folding apparatus 10.

Referring to FIG. 2, the pre-folding apparatus 10 of the present disclosure includes a main frame 100, a rib 200, a pusher support portion 300, and a pusher 400.

The main frame 100 is a frame forming a framework of the pre-folding apparatus 10 and includes a pair of columns 110 standing in the vertical direction and a horizontal bar 120 configured to connect upper portions of the columns 110. A support member 130 configured to support the pre-folding apparatus 10 is present at a bottom of the main frame 100, and the space between the pair of columns 110 is empty.

The rib 200 corresponds to a transverse member installed to be fixed across the pair of columns 110 under the horizontal bar 120. Both end portions of the rib 200 are fixed to the columns 110 and firmly supported, and a forming protrusion 210 whose upper end is flat is provided at the rib 200.

Also, the pusher support portion 300 that can move in the vertical direction along the columns 110 is disposed above the rib 200, that is, between the horizontal bar 120 and the rib 200. The pusher support portion 300 is coupled to rails formed on the columns 110 and is connected to be able to move linearly in the vertical direction. The vertical movement of the pusher support portion 300 is performed by a linear driving portion 310, such as a linear motor.

Although the linear driving portion 310 is mounted on the pusher support portion 300 in the illustrated embodiment, the linear driving portion 310 may be installed on the main frame 100. In this respect, the linear driving portion 310 is shown as an element included in the pusher support portion 300 in consideration of a function of the linear driving portion 310 vertically moving the pusher support portion 300, and such a description does not limit the mounting position of the linear driving portion 310 to the pusher support portion 300.

The pusher 400 is a member installed at the pusher support portion 300 and may be referred to as a kind of pressing member. The pusher 400 is aligned with the forming protrusion 210 of the rib 200 positioned under the pusher 400. That is, the pusher 400 uses the forming protrusion 210 as a sort of support to press a sharp portion of a bridge 534 of a laminate sheet 530 that is placed on the forming protrusion 210.

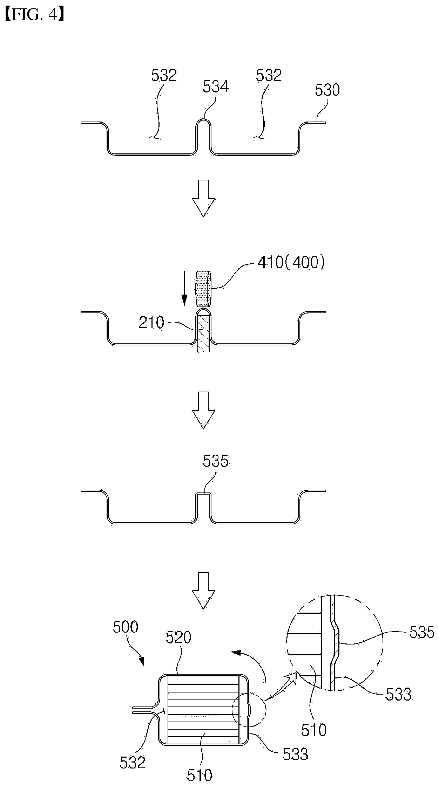

In more detail, with reference to FIG. 4, in a process prior to pre-folding, the laminate sheet 530 is molded in a form including two concave storage portions 532 configured to accommodate an electrode assembly 510 and the bridge 534 formed to protrude from in between the two concave storage portions 532. The bridge 534 is a folded connecting portion that divides the two storage portions 532 from each other and is a portion that forms a sidewall 533 of the storage portions 532 in a battery case 520 by a center of the bridge 534 being unfolded 180°.

The laminate sheet 530 molded in the above form is added to the pre-folding apparatus 10 of the present disclosure by the bridge 534 being fitted to the forming protrusion 210 of the rib 200. When the laminate sheet 530 is added to the pre-folding apparatus 10 in this way, as illustrated in FIG. 3, the pusher support portion 300 moves downward toward the rib 200 due to an operation of the linear driving portion 310, and the pusher 400 installed at the pusher support portion 300 which has moved downward presses a sharp portion of the bridge 534, which is fitted to the forming protrusion 210, to plastically deform the sharp portion so that the sharp portion becomes flat.

Here, a width of the pusher 400 may be wider than a width of the upper end of the forming protrusion 210. In other words, a width of a flat portion 535 formed at the sharp portion of the bridge 534 may be designed to correspond to the width of the upper end of the forming protrusion 210, and the width of the pusher 400 pressing the bridge 534 placed on the forming protrusion 210 may be designed to be wider than the width of the upper end of the forming protrusion 210. In this way, the pusher 400 may be configured to have a width sufficient for the width of the flat portion 535. When necessary, a material of the pusher 400 may be made harder than a material of the laminate sheet 530 but softer than a material of the forming protrusion 210 to further improve the adhesion between the pusher 400 and the laminate sheet 530.

The above process corresponds to "pre-folding" defined in the present disclosure, and the pre-folding is performed in a state in which the laminate sheet 530 does not store the electrode assembly 510. Also, the pre-folding in the present disclosure is distinguished from the conventional primary folding in which the laminate sheet 530 is folded in half and should be understood as a preliminary process in which plastic working is performed to form the flat portion 535 that is performed prior to main folding.

Once the pre-folding is completed, the sharp portion of the bridge 534 constitutes the smooth flat portion 535 throughout the entire area of the bridge 534. After the pre-folding is finished, the electrode assembly 510 is accommodated in the storage portions 532, and main folding in which the bridge 534 is reversely folded 180° is performed. Once the main folding is finished, the bridge 534 which has been folded 180° is unfolded to a shape constituting the sidewall 533 of the storage portions 532. Using the pre-folding apparatus 10 of the present disclosure, since the sharp portion of the bridge 534 forms the flat portion 535, a conventional problem that the sharp portion of the bridge 534 pushes the electrode assembly 510 in the storage portions 532 does not occur. That is, since a height of the sharp portion of the bridge 534 is decreased as compared to a beginning due to forming the flat portion 535, and the sharp portion of the bridge 534 has already been plastically deformed, the sharp portion is not significantly deformed in the main folding process. Therefore, in the laminate sheet 530 which has undergone the preliminary folding of the present disclosure, the bridge 534 does not distort alignment of the electrode assembly 510 even after the main folding ends.

Using the pre-folding apparatus 10 of the present disclosure, a pouch-type battery 500 having the configuration below may be provided. FIG. 4 may be referenced for features of a shape of the pouch-type battery 500 according to the present disclosure.

The pouch-type battery 500 includes the electrode assembly 510 and the battery case 520. In the battery case 520, the storage portions 532 configured to accommodate the electrode assembly 510 protrude from both sides in a thickness direction, and edges of three surfaces, excluding one corner forming the sidewall 533 of the storage portions 532, are sealed by heat fusion. Here, in the battery case 520, the plastically-worked flat portion 535 is formed to extend along a middle of the sidewall 533 of the storage portions 532 (that is, a side surface where the laminate sheet is connected without being interrupted). The sidewall 533 of the storage portions 532 is a result of performing plastic working so that the sharp portion of the bridge 534 becomes flat. The flat portion 535 at the center of the bridge 534 maintains the alignment of the electrode assembly 510 in a favorable state and also improves external quality.

Another configuration of the first embodiment will be described in detail below by referring back to FIG. 2.

In the first embodiment, the pusher 400 is configured as a roller 410 configured to move in a longitudinal direction of the pusher support portion 300 due to driving of a roller traveling portion 412. The roller 410 may have a rotating shaft and rotate (rotate on its axis), and the roller 410 pressing the sharp portion of the bridge 534 rotates and travels in a direction across the columns 110 (leftward in the drawing) due to driving of the roller traveling portion 412. In this way, the roller 410, which is the pusher 400, performs plastic working so that the sharp portion of the bridge 534 becomes flat throughout the entire area of the bridge 534.

Also, the pre-folding apparatus 10 may further include a roller driving portion 414 configured to autonomously rotate the roller 410. The roller driving portion 414 connected to the rotating shaft of the roller 410 may rotate the roller 410 by power, and the roller 410 rotating by the power may more uniformly press the sharp portion of the bridge 534 while not being affected by external conditions (e.g., changes in surface roughness, frictional force, or the like).

Also, in response to a power load, which is applied during the downward movement of the pusher support portion 300, reaching a reference value, the linear driving portion 310 may stop the downward movement. Of course, such control may be performed by a controller (not illustrated). A lower limit of the downward movement of the pusher support portion 300, that is, an upper limit of a pressure with which the sharp portion of the bridge 534 is pressed by the pusher 400 may be measured and controlled using various sensors. As one example, when a high load acts on the linear driving portion 310 during the downward movement of the pusher support portion 300, since the high load indicates that the pusher 400 and the forming protrusion 210 are in contact and pressure is being applied without substantial movement of positions, the power applied to the linear driving portion 310 may be monitored to set a lower limit of operation thereof.

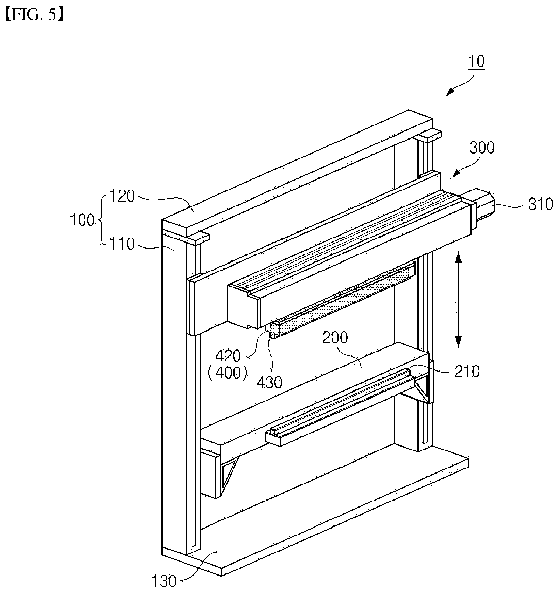

Meanwhile, FIG. 5 illustrates a pre-folding apparatus 10 according to a second embodiment of the present invention.

In the second embodiment shown in FIG. 5, a difference from the first embodiment is that the pusher 400 is a bar-type pusher 420 whose length corresponds to a length of the forming protrusion 210. That is, while the pusher 400 of the first embodiment is the roller 410, the pusher 400 of the second embodiment is the bar-type pusher 420 having a shape of a long bar.

When the pusher 400 is configured as the long bar-type pusher 420 whose length corresponds to the length of the forming protrusion 210, there is an advantage that the roller traveling portion 412 and the roller driving portion 414 included in the first embodiment are not necessary. That is, the configuration of the pre-folding apparatus 10 becomes simple, and accordingly, the control content is also simplified.

However, since the flat portion 535 has to be completely formed at the bridge 534 by one downward movement of the bar-type pusher 420, it may be rather unfavorable in terms of plastic working of the bridge 534.

In consideration of the above, even for the bar-type pusher 420, a width of the bar-type pusher 420 may be made wider than the width of the upper end of the forming protrusion 210, and a material of the bar-type pusher 420 may be made harder than the material of the laminate sheet 530 but softer than the material of the forming protrusion 210.

Further, a heater 430 configured to heat the bar-type pusher 420 may be additionally provided as necessary. An increase in the temperature of the bar-type pusher 420 may improve moldability of the laminate sheet 530.

However, there is a concern that the hot bar-type pusher 420 may melt a thermoplastic resin forming an internal insulating layer of the laminate sheet 530. Therefore, the heater 430 may heat the bar-type pusher 420 to a temperature range lower than a melting point of the internal insulating layer of the laminate sheet 530.

For example, the laminate sheet 530 may have a three-layer structure that includes an aluminum thin film layer, a first resin layer formed at an inner side of the aluminum thin film layer that faces the electrode assembly 510, and a second resin layer formed at an outer side of the aluminum thin film layer (not illustrated). The first resin layer may be made of a polypropylene (PP) resin as the thermoplastic resin forming the internal insulating layer, and the second resin layer may be made of a polyethylene terephthalate (PET) resin. For reliable fusion of the laminate sheet 530, the first resin layer made of the PP resin has a lower melting point than the second rein layer. For example, the melting point of the PP resin is about 170 °C, which is about 100 °C lower than the melting point of the PET resin.

In this way, when the internal insulating layer of the laminate sheet 530 is made of the PP resin, the heater 430 may heat the bar-type pusher 420 to a temperature range lower than 170 °C which is the melting point of the PP resin. For example, the heater 430 may heat the bar-type pusher 420 to a temperature in a range of 100 °C to 140 °C.

Here, the heater 430 has been described as being provided at the bar-type pusher 420 of the second embodiment, but the heater 430 may also be provided at the roller 410, which is the pusher 400 of the first embodiment. Therefore, the above description of the heater 430 should be understood as indicating that it is more useful when the heater 430 is provided at the bar-type pusher 420 of the second embodiment.

The present invention has been described in detail above using the drawings, embodiments, or the like. However, configurations illustrated or described in the drawings or embodiments herein are only some embodiments of the present invention and do not represent the entire technical spirit of the present invention. Therefore, it should be understood that various equivalents and modifications that may replace the corresponding configurations may be present at the time of filing this application.

### [Description of reference numerals]

10: pre-folding apparatus 100: main frame
110: column 120: horizontal bar
200: rib 210: forming protrusion
300: pusher support portion 310: linear driving portion
400: pusher 410: roller
412: roller traveling portion 414: roller driving portion
420: bar-type pusher 430: heater
500: pouch-type battery 510: electrode assembly
520: battery case 530: laminate sheet
532: storage portion 533: sidewall
534: bridge 535: flat portion

### [industrial Applicability]

Embodiments of the present invention are useful for use as an apparatus for molding a laminate sheet that forms a pouch-type secondary battery case.

## Claims

1. A pre-folding apparatus for a pouch-type battery, the pre-folding apparatus comprising:
a main frame including a pair of columns and a horizontal bar configured to connect upper portions of the columns;
a rib positioned and fixed across the pair of columns under the horizontal bar and having a forming protrusion whose upper end is flat;
a pusher support portion disposed above the rib and including a linear driving portion configured to move the pusher support portion in a vertical direction along the columns; and
a pusher installed at the pusher support portion and aligned with the forming protrusion.

2. The pre-folding apparatus of claim 1, wherein:
a laminate sheet including a bridge formed to protrude from in between two concave storage portions configured to accommodate an electrode assembly is positioned so that the bridge is configured to be fitted to the forming protrusion; and
due to downward movement of the pusher support portion, the pusher is configured to press a sharp portion of the bridge so that the sharp portion is plastically deformed to be flat.

3. The pre-folding apparatus of claim 2, wherein the pusher is a roller configured to be moved by a roller traveling portion in a longitudinal direction of the pusher support portion.

4. The pre-folding apparatus of claim 3, wherein the roller traveling portion is configured to move the roller along the longitudinal axis of the forming protrusion.

5. The pre-folding apparatus of claim 4, further comprising a roller driving portion connected to a rotating shaft of the roller to rotate the roller.

6. The pre-folding apparatus of claim 2, wherein the pusher is a bar-type pusher whose length corresponds to a length of the forming protrusion.

7. The pre-folding apparatus of claim 2, wherein a width of the pusher is wider than a width of the upper end of the forming protrusion.

8. The pre-folding apparatus of claim 2, wherein the pusher support portion is configured to stop a downward movement when a power load applied during the downward movement of the pusher support portion reaches a reference value.

9. The pre-folding apparatus of claim 2, further comprising a heater configured to heat the pusher.

10. The pre-folding apparatus of claim 9, wherein the heater heats the pusher to a temperature range lower than a melting point of a thermoplastic resin forming an internal insulating layer of the laminate sheet.

11. A pouch-type battery comprising:
an electrode assembly; and
a pouch-type battery case including storage portions protruding in opposite directions along a longitudinal axis of the pouch-type battery case configured to accommodate the electrode assembly, the storage portions are surround by a sidewall and edges of three surfaces, and the edges are sealed by heat fusion,
wherein a plastically-worked flat portion is disposed along a middle of the sidewall.
